# EUROPEAN PATENT APPLICATION

(11) **EP 4 539 140 A1**
(43) Date of publication of application: **16.04.2025**
(21) Application number: 24205443.5
(22) Date of filing: 09.10.2024
(51) Int. Cl.: H01M 4/133, H01M 4/587, H01M 4/62, H01M 10/052, H01M 10/62, H01M 4/02

(54) **NEGATIVE ACTIVE MATERIAL FOR RECHARGEABLE LITHIUM BATTERY, NEGATIVE ELECTRODE INCLUDING SAME, AND RECHARGEABLE LITHIUM BATTERY INCLUDING SAME**

(30) Priority: 12.10.2023 KR 20230136250
(71) Applicant: SAMSUNG SDI CO., LTD., Yongin-si, Gyeonggi-do 17084 (KR)
(72) Inventor: Kim, Minjun, 17084 Gyeonggi-do (KR); Hong, Minyoung, 17084 Gyeonggi-do (KR); An, Hoyong, 17084 Gyeonggi-do (KR); Kim, Beom, 17084 Gyeonggi-do (KR); Jo, Gurnyoung, 17084 Gyeonggi-do (KR); Kim, Soochan, 17084 Gyeonggi-do (KR); Jung, Hyeseung, 17084 Gyeonggi-do (KR)
(74) Representative: Michalski Hüttermann & Partner Patentanwälte mbB

(57) **Abstract**

Disclosed are a negative active material for a rechargeable lithium battery, a negative electrode including the negative active material, and a rechargeable lithium battery including the same. The negative active material includes crystalline carbon, wherein the crystalline carbon has a Raman spectrum peak intensity ratio (I_{D}/I_{G}) of a peak intensity (I_{D}) of a D peak (about 1360 cm⁻¹ to about 1370 cm⁻¹) relative to a peak intensity (I_{G}) of a G peak (about 1580 cm⁻¹ to about 1590 cm⁻¹) of less than about 0.05.

## Description

### BACKGROUND

### 1. Field

Embodiments of this disclosure relate to a negative active material for a rechargeable lithium battery, a negative electrode including the same, and a rechargeable lithium battery including the same.

### 2. Description of the Related Art

Recently, the rapid advance of electronic devices such as mobile phones, laptop computers, and electric vehicles using batteries has resulted in surprising increases in demand for rechargeable batteries having relatively high capacity and lighter weight. Accordingly, research for improving the performance of rechargeable lithium batteries is being actively conducted.

A rechargeable lithium battery includes a positive electrode and a negative electrode which include active materials capable of intercalating and deintercalating lithium ions, and an electrolyte, and generate electrical energy due to the oxidation and reduction reaction when lithium ions are intercalated and deintercalated into the positive electrode and the negative electrode.

### SUMMARY

One or more embodiments of the present disclosure provide a negative active material for a rechargeable lithium battery exhibiting excellent electrochemical characteristics.

One or more embodiments provide a negative electrode for a rechargeable lithium battery including the negative active material.

One or more embodiments provide a rechargeable lithium battery including the negative electrode.

One or more embodiments provide a negative active material for a rechargeable lithium battery including a crystalline carbon, wherein the crystalline carbon has a Raman spectrum peak intensity ratio (I_{D}/I_{G}) of a peak intensity (I_{D}) of a D peak (about 1360 cm⁻¹ to about 1370 cm⁻¹) relative to a peak intensity (I_{G}) of a G peak (about 1580 cm⁻¹ to about 1590 cm⁻¹) of less than about 0.05.

One or more embodiments provide a negative electrode for a rechargeable lithium battery including the negative active material; a cellulose-based compound; and an aqueous binder.

One or more embodiments provide a rechargeable lithium battery including the negative electrode; a positive electrode, and an electrolyte.

A negative active material for a rechargeable lithium battery according to one or more embodiments may exhibit excellent electrochemical characteristics.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

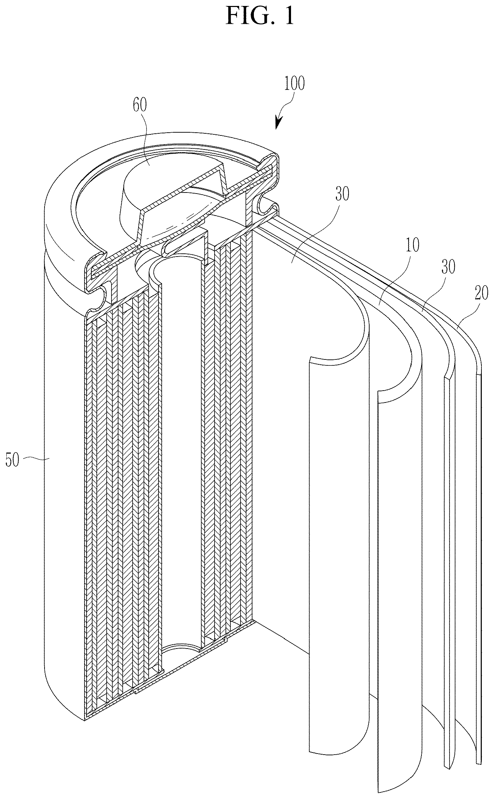

FIG. 1 to FIG. 4 are schematic diagrams showing rechargeable lithium batteries according to one or more embodiments.

### DETAILED DESCRIPTION

Hereinafter, embodiments are described in more detail. However, these embodiments are examples, the present disclosure is not limited thereto and the scope of the present disclosure is defined by the scope of claims, and equivalents thereof.

Unless otherwise defined in the specification, it will be understood that when an element such as a layer, film, region, or substrate is referred to as being "on" another element, it can be directly on the other element or intervening elements may also be present.

Unless otherwise defined in the specification, expressions in the singular include expression in plural. Unless otherwise defined, "A or B" may mean as "include A or B, or include A and B".

As used herein, the term "combination thereof' may include a mixture, a laminate, a complex, a copolymer, an alloy, a blend, a reactant of constituents, and/or a reaction product of reactants.

Unless otherwise defined in the specification, a particle diameter may be an average particle diameter. As used herein, the particle diameter refers to an average particle diameter (D50) where a cumulative volume is about 50 volume% in a particle distribution. The average particle diameter D50 may be measured by any suitable method generally used in the art. For example, the average particle diameter D50 may be measured by a particle size analyzer, a transmission electron microscope image, and/or a scanning electron microscope image. In one or more embodiments, a dynamic light-scattering measurement device may be used to perform a data analysis, and the number of particles may be counted for each particle size range, and from this, the average particle diameter (D50) value may be easily obtained through a calculation. In one or more embodiments, a laser diffraction method may be used to measure the average particle diameter D50. The laser diffraction method may be performed by distributing particles to be measured in a distribution solvent and introducing it to a commercially available laser diffraction particle measuring device (e.g., MT 3000 available from Microtrac, Inc.), irradiating ultrasonic waves of about 28 kHz at a power of 60 W, and calculating an average particle diameter (D50) in the 50% standard of particle distribution in the measuring device.

A negative active material for a rechargeable lithium battery according to one or more embodiments includes a crystalline carbon.

The following Raman spectrum peak and a contact angle to water are physical properties of crystalline carbon, and the negative active material according to one or more embodiments is the crystalline carbon, so they may represent the physical properties of the negative active material.

In one or more embodiments, a peak intensity ratio (ID/IG) of a Raman spectrum peak intensity (ID) of a D peak (about 1360 cm⁻¹ to about 1370 cm⁻¹) relative to a peak intensity (IG) of a G peak (about 1580 cm⁻¹ to about 1590 cm⁻¹) of the crystalline carbon is less than about 0.05, or may be less than about 0.05 and about 0.01 or more.

If the Raman spectrum peak intensity ratio (I_{D}/I_{G}) of the crystalline carbon is within the ranges disclosed herein, a negative active material layer including the same may have excellent adherence to a current collector. This may render to improve the electrochemical characteristics such as the cycle-life characteristics.

In one or more embodiments, the Raman spectrum peak intensity may be measured by using an argon (Ar) laser. The Ar laser may be a laser using a wavelength of about 514 nm ± about 10 nm (e.g., a layer that emits light having a wavelength of about 514 nm ± about 10 nm).

In one or more embodiments, the peak intensity ratio may be a height ratio of the peaks. For example, the peak intensity ratio (I_{G}/I_{D}) represents a ratio of a height of peak appeared at D (about 1360 cm⁻¹ to about 1370 cm⁻¹), e.g., a peak intensity (I_{D}) relative to a height of a peak appeared at G (about 1580 cm⁻¹ to about 1590 cm⁻¹), e.g., a peak intensity (I_{G}).

The crystalline carbon according to one or more embodiments may have a contact angle to water, for example, a surface roughness, of about 100° to about 140°, or about 100° to about 130°. The contact angle to water may be measured by preparing a film with a crystalline carbon liquid in which crystalline carbon is added to a solvent, dropping water onto the film, and determining an angle between a droplet formed on the film and the film. The solvent may be water, N-methyl-2-pyrrolidone (NMP), or a combination thereof.

If the contact angle is within the ranges disclosed herein, the surface of the crystalline carbon surface may be hydrophobic. If the surface of the crystalline carbon is hydrophobic, a hydrophobic interaction between the crystalline carbon and the cellulose-based compound may be improved. Thus, the crystalline carbon which is the negative active material may be firmly bonded to the cellulose-based compound as a thickener, and thus, the adherence between the crystalline carbon and the thickener may be improved and the ability for coating may be enhanced.

In one or more embodiments, the crystalline carbon may be artificial graphite, natural graphite, or a combination thereof. For example, the crystalline carbon may be an unspecified shape, sheet shape, flake shape, spherical shape, or fiber shape artificial graphite, natural graphite, or combination thereof.

### Preparation of negative active material

A negative active material according to one or more embodiments may be prepared by mixing a crystalline carbon together with a ROH (wherein, R is an alkyl group) to prepare a mixture and heat-treating the mixture.

The R may be a C1 to C7 alkyl, and a linear or branched alkyl group. The ROH may be methanol, ethanol, isopropyl alcohol, benzyl alcohol, or a combination thereof.

A mixing ratio of the crystalline carbon to the ROH may be a weight ratio of about 10:1 to about 100:1, or a weight ratio of about 20:1 to about 100: 1. If the mixing ratio of the crystalline carbon and the ROH is within the ranges disclosed herein, the surface of the crystalline carbon may suitably or sufficiently hydrophobicized.

The heat-treatment may be carried out about 50 °C to about 200 °C, about 70 °C to about 200 °C, or about 100 °C to about 200 °C. The heat-treatment may be performed for about 12 hours to about 120 hours, about 12 hours to about 100 hours, or about 12 hours to about 50 hours.

The heat-treatment may be carried out by using a condenser and/or a pressure vessel.

According to the heat-treatment, an OH group which may be naturally present on the surface of the crystalline carbon, and a H group (e.g., a hydrogen) of the ROH may be condensed together and polymerized (e.g., reacted) to be removed as H₂O. This may result in the removal of the OH group that may naturally exist on the surface of the crystalline carbon, and consequently, the surface of the crystalline carbon may exhibit hydrophobicity (e.g., the crystalline carbon may be hydrophobic after the heat-treatment).

The prepared negative active material may exhibit the above Raman spectrum intensity ratio, and may exhibit the contact angle to water disclosed herein.

### Negative electrode

A negative electrode according to one or more embodiments includes a negative active material, a cellulose-based compound, and an aqueous binder.

In one or more embodiments, the negative active material may be the negative active material according to one or more embodiments. In one or more embodiments, the negative active material may include the negative active material according to one or more embodiments, as a first negative active material and may include a Si-based negative active material as a second negative active material. A mixing ratio of the first negative active material and the second negative active material may be a weight ratio of about 80:20 to about 99:1, or a weight ratio of about 80:20 to about 95:5.

The Si-based active material may be silicon, a silicon-carbon composite, SiOₓ (0<x<2), a Si-Q alloy (wherein Q is an element selected from an alkali metal, an alkaline-earth metal, a Group 13 element, a Group 14 element (except for Si), a Group 15 element, a Group 16 element, a transition metal, a rare earth element, and a combination thereof), or combination thereof.

The silicon-carbon composite may be a composite of silicon and amorphous carbon. According to one or more embodiments, the silicon-carbon composite may include silicon particles and an amorphous carbon coated on the surface of the silicon particles. For example, it may include secondary particles (e.g., a core) where silicon primary particles are agglomerated and an amorphous carbon coating layer (e.g., a shell) on the surface of the secondary particles. The amorphous carbon may be between the silicon primary particles, for example, to coat on the silicon primary particles. The secondary particle may be distributed in an amorphous carbon matrix.

The Si-C composite may further include crystalline carbon. For example, the silicon-carbon composite may include a core including crystalline carbon and silicon particles, and an amorphous carbon coating layer on the surface of the core.

The silicon particles may be silicon nano particles.

A particle diameter of the silicon nano particles may be about 10 nm to about 1000 nm, about 10 nm to about 200 nm, or about 20 nm to about 150 nm. If the particle diameter of the silicon nano particles is within the ranges disclosed herein, the extreme volume expansion caused in a rechargeable lithium battery during charge and discharge may be suppressed or reduced, and a breakage of the conductive path due to crushing of particle may be prevented or reduced.

The silicon-carbon composite may include silicon nano particles as a core and an amorphous carbon coating layer on the surface of the silicon nano particles. The silicon-carbon composite may include an agglomerated product where at least two silicon nano particles are agglomerated and an amorphous carbon coating layer on the surface of the agglomerated product.

In the amorphous carbon coating layer, the amorphous carbon may be soft carbon, hard carbon, mesophase pitch carbide, sintered cokes, or a combination thereof. A thickness of the amorphous carbon coating layer may be about 1 nm to about 2 µm, about 1 nm to about 500 nm, about 10 nm to about 300 nm, or about 20 nm to about 200 nm. If the thickness of the amorphous carbon coating layer is within the ranges disclosed herein, the volume expansion of silicon may be effectively suppressed or reduced during charging and discharging.

The crystalline carbon may be graphite such as unspecified shape, sheet, flake, spherical, and/or fiber shaped natural graphite and/or artificial graphite.

If the silicon-carbon composite includes the silicon nano particles and the amorphous carbon coating layer, based on the total 100 wt% of the silicon-carbon composite, an amount of the silicon nano particles may be about 30 wt% to about 70 wt%, or about 40 wt% to about 65 wt%. An amount of the amorphous carbon coating layer may be, based on the total 100 wt% of the silicon-carbon composite, about 30 wt% to about 70 wt%, or about 35 wt% to about 60 wt%.

In embodiments further including the crystalline carbon in the silicon-carbon composite, based on the total 100 wt% of the silicon-carbon composite, an amount of the silicon nano particles may be about 20 wt% to about 70 wt%, or about 25 wt% to about 65 wt%. Based on the total 100 wt% of the silicon-carbon composite, an amount of the amorphous carbon may be about 25 wt% to about 70 wt%, or about 25 wt% to about 60 wt%, and an amount of the crystalline carbon may be about 1 wt% to about 20 wt%, or about 5 wt% to about 15 wt%.

In the negative active material layer, an amount of the negative active material may be about 93 wt% to about 98 wt% based on the total 100 wt% of the negative active material layer.

An amount of the cellulose-based compound may be, based on the total 100 wt% of the negative active material layer, about 0.1 wt% to about 5.0 wt%, about 0.3 wt% to about 3.0 wt%, or about 0.5 wt% to about 2.0 wt%. If the amount of the cellulose-based compound is within the ranges disclosed herein, the adherence may be suitable or satisfied and excellent battery performance may be exhibited.

An amount of the aqueous binder may be, based on the total 100 wt% of the negative active material layer, about 0.1 wt% to about 5.0 wt%, about 0.1 wt% to about 3.0 wt%, or about 0.1 wt% to about 2.0 wt%. If the amount of the aqueous binder is the ranges disclosed herein, the adherence of the electrode may be improved.

The cellulose-based compound includes one or more of carboxymethyl cellulose, hydroxypropylmethyl cellulose, methyl cellulose, or alkali metal salts thereof. The alkali metal may be Na, K, and/or Li.

The aqueous binder may be a styrene-butadiene rubber, a (meth)acrylated styrene-butadiene rubber, a (meth)acrylonitrile-butadiene rubber, a (meth)acryl rubber, a butyl rubber, a fluorine rubber, polyethylene oxide, polyvinyl pyrrolidone, polyepichlorohydrin, polyphosphazene, poly(meth)acrylonitrile, ethylenepropylenediene copolymer, polyvinylpyridine, chlorosulfonated polyethylene, latex, a polyester resin, a (meth)acryl resin, a phenolic resin, an epoxy resin, polyvinyl alcohol, or a combination thereof.

The negative active material layer according to one or more embodiments may further include a conductive material (e.g., an electrically conductive material). The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, carbon nanofiber, carbon nanotubes, and the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

If the negative active material layer according to one or more embodiments includes the conductive material, an amount of the conductive material may be, based on the total 100 wt% of the negative active material layer, about 1 wt% to about 3 wt%.

A negative electrode according to one or more embodiments includes a current collector supporting the negative active material layer. The current collector may include one selected from a copper foil, a nickel foil, a stainless steel foil, a titanium foil, a nickel foam, a copper foam, a polymer substrate coated with a conductive metal (e.g., an electrically conductive metal), and a combination thereof.

### Rechargeable lithium battery

Another embodiment provides a rechargeable lithium battery including a negative electrode, a positive electrode, and an electrolyte.

The negative electrode may be the negative electrode according to one or more embodiments.

### Positive electrode

The positive electrode may include a current collector and a positive active material layer on the current collector.

The positive active material layer may include a positive active material and may further include a binder and/or a conductive material (e.g., an electrically conductive material). For example, the positive electrode may further include an additive that may serve as a sacrificial positive electrode.

The positive active material may include a compound (lithiated intercalation compound) that is capable of intercalating and deintercalating lithium. In some embodiments, at least one of a composite oxide of lithium and a metal selected from cobalt, manganese, nickel, or combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by one selected from the following Chemical Formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and may be applied to a high-capacity, high-density rechargeable lithium battery.

In the positive electrode, an amount of the positive active material may be about 90 wt% to about 98 wt% based on the total weight of the positive active material layer. Amounts of the binder and the conductive material may each be about 1 wt% to about 5 wt% based on the total weight of the positive active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoro ethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder and/or a metal fiber; a conductive polymer (e.g., an electrically conductive polymer) such as a polyphenylene derivative; or a mixture thereof.

Al may be used as the current collector, but is not limited thereto.

### Electrolyte

The electrolyte includes a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvents may be used alone or in combination of two or more.

If using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂)(wherein x and y are integers of 1 to 20), lithium trifluoromethane sulfonate, lithium tetrafluoroethane sulfonate, lithium difluorobis(oxalato)phosphate (LiDFOB), or lithium bis(oxalato) borate (LiBOB).

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg (OH)₂, boehmite, or a combination thereof, but is not limited thereto.

The organic material and the inorganic material may be mixed together in one coating layer, or a coating layer including an organic material and a coating layer including an inorganic material may be stacked.

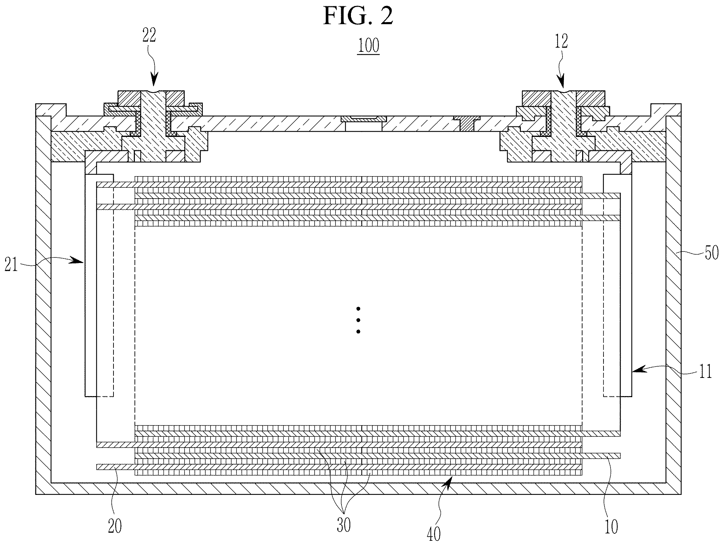

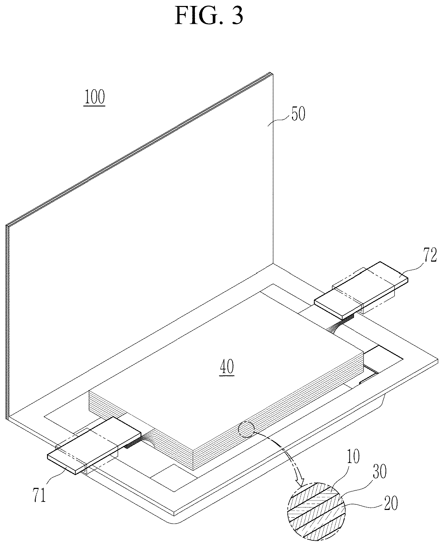

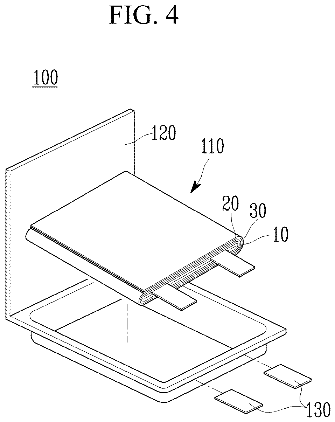

The rechargeable lithium battery may be classified into cylindrical, prismatic, pouch, or coin-type batteries, and/or the like depending on their shape. FIGS. 1 to 4 are schematic views illustrating a rechargeable lithium battery according to an embodiment. FIG. 1 shows a cylindrical battery, FIG. 2 shows a prismatic battery, and FIG. 3 and FIG. 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIG. 3 and FIG. 4, the rechargeable lithium battery 100 may include an electrode tab 70, which may be a positive electrode tab 71 and a negative electrode tab 72 serving as an electrical path for inducing the current formed in the electrode assembly 40 to the outside..

The rechargeable lithium battery according to an embodiment may be applied to automobiles, mobile phones, and/or various suitable types of electric devices, as non-limiting examples.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

### Example 1

Artificial graphite and isopropyl alcohol were mixed together at a weight ratio of 18:1. The resulting mixture was subjected to heat-treatment at 100 °C for 12 hours using a condenser to prepare a negative active material.

97.5 wt% of the negative active material, 1.5 wt% of carboxymethyl cellulose, and 1 wt% of a styrene butadiene rubber were mixed together in a water solvent to prepare a negative active material layer slurry.

The negative active material layer slurry was coated on a Cu foil current collector, dried, and pressurized to prepare a negative electrode in which a negative active material layer was formed on the current collector.

The negative electrode, a lithium metal counter electrode, and an electrolyte were used to fabricate a half-cell by a general procedure. The electrolyte was prepared by dissolving 1 M LiPF₆ in a mixed solvent of ethylene carbonate and dimethyl carbonate (3:7 volume ratio).

### Example 2

A negative electrode and a half-cell were fabricated by the same procedure as in Example 1, except that natural graphite was used instead of artificial graphite.

### Comparative Example 1

97.5 wt% of an artificial graphite negative active material, 1.5 wt% of carboxymethyl cellulose, and 1 wt% of a styrene butadiene rubber were mixed together in a water solvent to prepare a negative active material layer slurry.

A negative electrode and a half-cell were fabricated by the same procedure as in Example 1, except that the negative active material layer slurry was used.

### Comparative Example 2

A negative electrode and a half-cell were fabricated by the same procedure as in Comparative Example 1, except that natural graphite negative active material was used instead of artificial graphite negative active material.

### Comparative Example 3

Artificial graphite and isopropyl alcohol were mixed together at a weight ratio of 18:1. The resulting mixture was dried at 25 °C to prepare a negative active material.

97.5 wt% of the negative active material, 1.5 wt% of carboxymethyl cellulose, and 1 wt% of a styrene butadiene rubber were mixed together in a water solvent to prepare a negative active material layer slurry.

A negative electrode and a half-cell were fabricated by the same procedure as in Example 1, except that the negative active material layer slurry was used.

### Comparative Example 4

A negative electrode and a half-cell were fabricated by the same procedure as in Comparative Example 3, except that natural graphite was used instead of artificial graphite.

### Experimental Example 1 Measurement of Raman spectrum

The Raman spectrum of the negative active materials of Examples 1 and 2, and Comparative Examples 1 to 4 were measured by using an Ar laser that emits light having a wavelength of 514 nm. In the measured Raman spectrum result, a peak intensity ratio (I_{D}/I_{G}) of a peak intensity (height of peak) which was a height of a D peak (1360 cm⁻¹) relative to a peak intensity (height of peak) which was a height of G peak (1580 cm⁻¹) was obtained. The results are shown in Table 1.

### Experimental Example 2 Evaluation of contact angle

The negative active materials of Examples 1 and 2, and Comparative Examples 1 to 4 were added to a water solvent to prepare a negative active material liquid, and the negative active material liquid was used to prepare a negative active material film. 10 µl of water was dropped to the negative active material film and an angle between the droplet of the film and the film was measured. The results are shown in Table 1, as a contact angle.

### Experimental Example 3 Evaluation of adherence

In Examples 1 and 2, and Comparative Examples 1 to 4, the adhesion between the current collector and the negative active material layer was each measured by using a tensile tester (available from SHIMADZU Corporation) under a 180 degree (°) peel test method at a condition of 100 mm/min. The results are shown in Table 1.

**Table 1**

| | I_{D}/I_{G} | Contact angle (°) | Adherence (gf/mm) |
|---|---|---|---|
| Example 1 | 0.024 | 103 | 1.18 |
| Example 2 | 0.021 | 105 | 1.31 |
| Comparative Example 1 | 0.112 | 88.2 | 0.72 |
| Comparative Example 2 | 0.084 | 84.5 | 0.83 |
| Comparative Example 3 | 0.077 | 89.1 | 0.75 |
| Comparative Example 4 | 0.073 | 89.8 | 0.81 |

As shown in Table 1, the negative active materials of Examples 1 and 2 had a peak intensity ratio (I_{D}/I_{G}) of lower than 0.05. Whereas, the artificial graphite or the natural graphite negative active material of Comparative Examples 1 and 2 had a high peak intensity ratio (I_{D}/I_{G}) of 0.05 or more. The negative active materials of Comparative Examples 3 and 4 which were prepared by mixing together the artificial graphite or natural graphite with the ROH, but no heat-treating, exhibited a high peak intensity ratio (I_{D}/I_{G}) of 0.05 or more.

The contact angle to water of the negative active materials of Examples 1 and 2 was found to be 103° and 105°, but the contact angle to water of the negative active materials of Comparative Examples 1 to 4 was 88.2° to 89.8°. Thus, it was clearly shown that the negative active materials of Examples 1 and 2 were hydrophobic.

The negative electrodes of Examples 1 and 2 exhibited surprisingly high adhesion, compared to the negative electrodes of Comparative Examples 1 to 4.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the spirit and scope of the appended claims, and equivalents thereof.

## Claims

1. A negative active material for a rechargeable lithium battery (100), comprising:
crystalline carbon,
wherein the crystalline carbon has a Raman spectrum peak intensity ratio (I_{D}/I_{G}) of a peak intensity (I_{D}) of a D peak (about 1360 cm⁻¹ to about 1370 cm⁻¹) relative to a peak intensity (I_{G}) of a G peak (about 1580 cm⁻¹ to about 1590 cm⁻¹) of less than about 0.05.

2. The negative active material for a rechargeable lithium battery (100) as claimed in claim 1, wherein the Raman spectrum peak intensity ratio (I_{D}/I_{G}) is less than about 0.05 and about 0.01 or more.

3. The negative active material for a rechargeable lithium battery (100) as claimed in claim 1 or 2, wherein the crystalline carbon comprises artificial graphite, natural graphite, or a combination thereof.

4. The negative active material for a rechargeable lithium battery (100) as claimed in any one of claims 1 to 3, wherein the negative active material is prepared by mixing together the crystalline carbon and a ROH, wherein the R is an alkyl group, to prepare a mixture; and
heat-treating the mixture.

5. The negative active material for a rechargeable lithium battery (100) as claimed in any one of claims 1 to 4, wherein the R is a C1 to C7 alkyl group.

6. The negative active material for a rechargeable lithium battery (100) as claimed in any one of claims 1 to 5, wherein the ROH comprises methanol, ethanol, isopropyl alcohol, benzyl alcohol, or a combination thereof.

7. The negative active material for a rechargeable lithium battery (100) as claimed in any one of claims 1 to 6, wherein a mixing ratio of the crystalline carbon and the ROH is a weight ratio of about 100:10 to about 100:1.

8. The negative active material for a rechargeable lithium battery (100) as claimed in any one of claims 1 to 7, wherein the heat-treating is performed at about 50 °C to about 200 °C.

9. The negative active material for a rechargeable lithium battery (100) as claimed in any one of claims 1 to 8, wherein the heat-treating is performed for about 12 hours to about 120 hours.

10. A negative electrode (20) for a rechargeable lithium battery (100), comprising:
a negative active material as claimed in any one of claims 1 to claim 9;
a cellulose-based compound; and
an aqueous binder.

11. The negative electrode (20) for a rechargeable lithium battery (100) as claimed in claim 10, wherein the cellulose-based compound comprises carboxymethyl cellulose, hydroxypropylmethyl cellulose, methyl cellulose, or an alkali metal salt, or a combination thereof.

12. The negative electrode for a rechargeable lithium battery (100) as claimed in claim 10 or 11, wherein the aqueous binder comprises a styrene-butadiene rubber, a (meth)acrylated styrene-butadiene rubber, a (meth)acrylonitrile-butadiene rubber, a (meth)acryl rubber, a butyl rubber, a fluorine rubber, polyethylene oxide, polyvinylpyrrolidone, polyepichlorohydrin, polyphosphazene, poly(meth)acrylonitrile, an ethylenepropylenediene copolymer, polyvinylpyridine, chlorosulfonated polyethylene, latex, a polyester resin, a (meth)acryl resin, a phenol resin, an epoxy resin, polyvinyl alcohol, or a combination thereof.

13. A rechargeable lithium battery (100), comprising:
a negative electrode (20) as claimed in claims 10 to 12;
a positive electrode (10); and
an electrolyte.
